# EUROPÄISCHE PATENTANMELDUNG

(11) **EP 1 741 946 A2**
(43) Veröffentlichungstag der Anmeldung: **10.01.2007**
(21) Anmeldenummer: 06017844.9
(22) Anmeldetag: 06.08.2002
(51) Int. Cl.: F16D 25/0638

(54) **Kupplungsanordnung**

(30) Priorität: 19.10.2001 DE 10151654
(62) Teilanmeldung aus: 05014863.4
(71) Anmelder: ZF Sachs AG, 97424 Schweinfurt (DE)
(72) Erfinder: Sudau, Jörg, 97464 Niederwerrn (DE)

(57) **Zusammenfassung**

Eine Kupplungsanordnung, insbesondere für ein Kraftfahrzeug mit einer Drehachse (A), ist mit einer drehfesten Ankoppelung einer mit Fluid gefüllten Gehäuseanordnung an eine Antriebswelle eines Antriebsaggregates versehen, und umfasst eine erste Gehäusenabe an einer einem Getriebe zugewandt positionierten Seite der Gehäuseanordnung, eine zweite Gehäusenabe an einer einem Antriebsaggregat zugewandt positionierten Seite der Gehäuseanordnung, wenigstens ein mit der Gehäuseanordnung zur gemeinsamen Drehung verbundenes erstes Reiborgari, und wenigstens ein mit der Abtriebswelle zur gemeinsamen Drehung verbundenes zweites Reiborgan. Die Kupplungsanordnung ist vermittels einer Axiallagerungsanordnung bezüglich einer Antriebswelle eines Antriebsaggregats abgestützt.

## Beschreibung

### Technisches Gebiet

Die vorliegende Erfindung betrifft eine Kupplungsanordnung nach dem Oberbegriff des Anspruches 1.

### Stand der Technik

Durch die DE 44 13 171 A1, Fig. 6 ist eine Kupplungsanordnung mit einer mit Fluid gefüllten, um eine Drehachse (A) bewegbaren Gehäuseanordnung bekannt, die insbesondere für ein Kraftfahrzeug vorgesehen ist. Die Gehäuseanordnung ist über eine drehfeste, aber axial flexible Ankoppelung an eine Antriebswelle, wie die Kurbelwelle einer als Antriebsaggregat dienenden Brennkraftmaschine, angebunden, so dass antriebsseitig keine Axialabstützung besteht. Die Gehäuseanordnung umfasst eine erste Gehäusenabe an einer einem Getriebe zugewandt positionierten Seite sowie eine zweite Gehäusenabe an einer einem Antriebsaggregat zugewandt positionierten Seite, und ist über ihre zweite Gehäusenabe bezüglich einer Abtriebswelle, die als Getriebeeingangswelle ausgebildet sein kann, zwar gelagert, jedoch lediglich in radialer Richtung. Darüber hinaus umschließt die der Drehbewegung der Antriebswelle relativ bewegungsfrei folgende Gehäuseanordnung eine Mehrzahl von mit ihr drehfeste Außenlamellen, die als erstes Reiborgan wirksam und mit einer Mehrzahl von als zweites Reiborgan dienenden Innenlamellen in Wirkverbindung bringbar sind, wobei das zweite Reiborgan mit der Abtriebswelle zur gemeinsamen Drehung verbunden ist. Durch die beiden Reiborgane wird eine Übertragung eines von der Antriebswelle auf die Gehäuseanordnung der Kupplungsanordnung übertragenen Momentes auf die Abtriebswelle ermöglicht.

Ein wesentliches Problem bei derartigen Kupplungsanordnungen ist, dass an der Antriebswelle sowohl Axial- als auch Radialkräfte einander überlagert auftreten und als Taumelbewegungen auf die Gehäuseanordnung der Kupplungsvorrichtung übertragen werden können. Da die Gehäuseanordnung sowohl antriebs- als auch abtriebsseitig ohne Axialabstützung ausgebildet ist, können diese Taumelbewegungen erhebliche Auslenkungen der Gehäuseanordnung in Achsrichtung auszulösen, zumal die Gehäuseanordnung mit Fluid gefüllt und damit erheblichen Krafteinflüssen unterworfen ist.

Aus der EP 1 418 359 A1 ist eine Kupplungsanordnung bekannt, bei welcher eine Momentenübertragung von einer Gehäuseanordnung auf eine Abtriebswelle mittels erster und zweiter Reiborgane erfolgt, wobei die Gehäuseanordnung über einen ersten Reiborganträger mit den ersten Reiborganen und die Abtriebswelle über einen zweiten Reiborganträger mit den zweiten Reiborganen in drehfester Verbindung steht. Die Gehäuseanordnung verfügt an ihrer von der Abtriebswelle abgewandten Seite über eine Gehäusenabe in Form eines Zentrierzapfens, der üblicherweise als Montagehilfe für die Gehäuseanordnung an einem Antrieb, wie einer Kurbelwelle einer Brennkraftmaschine, nutzbar ist, während die Montage selbst mittels einer nicht gezeigten flexiblen Platte erfolgt. Derartige flexible Platten lassen eine axiale Relativbewegung der Gehäuseanordnung gegenüber dem Antrieb zu.

Das gleiche Problem besteht bei der Kupplungsanordnung gemäß der EP 1 226 992 A1. Hier ist von einem Antrieb, wie einer Brennkraftmaschine, eine Kurbelwelle dargestellt, die über einen nicht dargestellten Torsionsschwingungsdämpfer mit einer Außenverzahnung an einer Kupplungsnabe in Drehverbindung versetzbar ist. Die Außenverzahnung wird gemäß zeichnerischer Darstellung durch eine Axialverzahnung gebildet, und vermag demnach keine Axialabstützung einer Gehäuseanordnung der Kupplungsanordnung oder eines Reiborganträgers vorzunehmen. Vielmehr zeigen die Figuren der Offenlegungsschrift ein axiales Spiel zwischen der Kupplungsnabe und der Kurbelwelle. Die gleiche technische Situation findet sich bei der Kupplungsanordnung gemäß der WO/006839 A2. Bei beiden Kupplungsanordnungen besteht keine Möglichkeit einer axialen Positionierung der Gehäuseanordnung gegenüber dem Antrieb.

Die US 4,802,564 A wiederum zeigt eine Kupplungsanordnung mit einer Gehäuseanordnung, welche durch eine Eingangswelle zwar zentriert, aber nicht axial positioniert ist. Die axiale Positionierung der Gehäuseanordnung erfolgt statt dessen abtriebsseitig durch eine auf einen Kragen wirksame Wälzlagerung.

### Aufgabe der Erfindung

Es ist die Aufgabe der vorliegenden Erfindung, eine Kupplungsanordnung, weiche über eine drehfeste Ankoppelung einer mit Fluid befüllten Gehäuseanordnung an eine Antriebswelle eines Antriebsaggregates verfügt, derart auszugestalten, dass auch bei von der Antriebswelle eingeleiteten Taumelbewegungen die Gehäuseanordnung in einer vorbestimmten axialen Relativlage gegenüber einer Abtriebswelle verbleibt.

### Darstellung der Erfindung

Erfindungsgemäß wird diese Aufgabe durch die im Anspruch 1 angegebenen Merkmale gelöst. Dabei ist vorgesehen, dass die Kupplungsanordnung vermittels einer Axiallagerungsanordnung bezüglich einer Antriebswelle eines Antriebsaggregats abgestützt oder abstützbar ist. Die axiale Abstützung bezüglich der Antriebswelle nimmt Axialkräfte auf, so dass beispielsweise die der Drehmomentübertragung dienenden Organe von Axialkräften im Wesentlichen freigehalten werden und ihre Drehmomentübertragungsfunktion davon unbeeinträchtigt erfüllen können. Dies trifft insbesondere dann zu, wenn die Drehmomentübertragungsverbindung über ein Zwei-Massenschwungrad erfolgt.

Beispielsweise kann bei einer derartigen Ausgestaltung vorgesehen sein, dass die Gehäuseanordnung im Bereich einer Gehäusenabe bezüglich der Antriebswelle axial gelagert ist. Hier kann beispielsweise vorgesehen sein, dass die Gehäusenabe an einer mit der Antriebswelle fest verbundenen Primärseite einer Torsionsschwingungsdämpferanordnung gelagert ist.

Die vorliegende Erfindung wird nachfolgend mit Bezug auf die beiliegenden Zeichnungen anhand bevorzugter Ausgestaltungsform detailliert beschrieben. Es zeigt:
- Fig. 1: eine Teil-Längsschnittansicht einer allerdings nicht erfindungsgemäßen Ausgestaltungsform einer Kupplungsanordnung;
- Fig. 2: eine der Fig. 1 entsprechende Ansicht einer Ausgestaltungsform der Kupplungsanordnung, die allerdings nicht Teil des vorliegenden Erfindungsgegenstandes sein soll;
- Fig. 3: eine weitere der Fig. 1 entsprechende Ansicht, jetzt allerdings die erfindungsgemäße Ausgestaltungsform der Kupplungsanordnung darstellend.

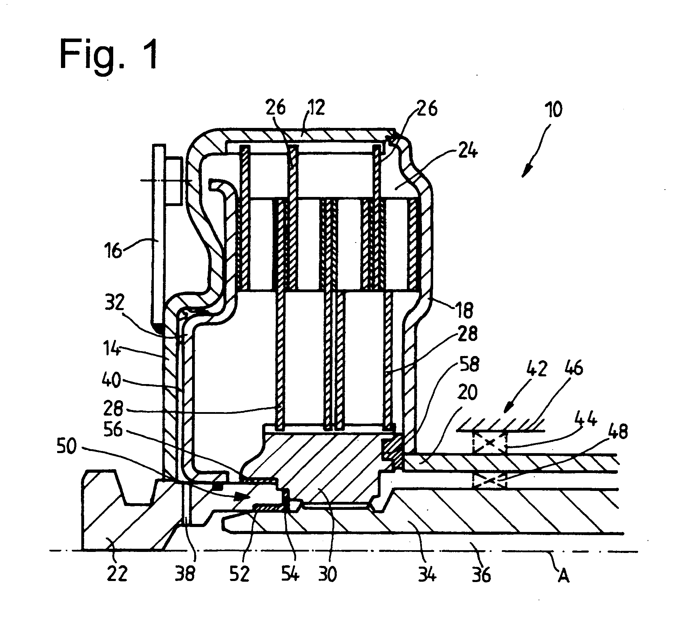

In Fig. 1 ist eine Kupplungsanordnung allgemein mit 10 bezeichnet. Die Kupplungsanordnung 10 umfasst eine Gehäuseanordnung 12, die im Bereich einer motomah zu positionierenden ersten Gehäuseschale 14 ein Mitnahmeelement 16 trägt. Über dieses Mitnahmeelement 16 kann beispielsweise unter Einsatz einer sogenannten Flexplatte o. dgl. eine drehfeste Ankopplung an die Antriebswelle eines Antriebsaggregats, also beispielsweise eine Kurbelwelle erfolgen. Am axial freien Ende ist mit der ersten Gehäuseschale 14 eine zweite Gehäuseschale 18 verbunden, welche im radial inneren Bereich mit einer näherungsweise zylindrisch ausgebildeten ersten Gehäusenabe 20, im Allgemeinen auch als Pumpennabe bezeichnet, fest verbunden ist. Die erste Gehäuseschale 14 ist im radial inneren Bereich mit einer zweiten Gehäusenabe 22, im Allgemeinen auch Antriebsnabe bezeichnet, fest verbunden.

In dem von der Gehäuseanordnung 12 umschlossenen Innenraum 24 ist eine Mehrzahl erster Lamellen 26 vorgesehen, die in an sich bekannter Art und Weise mit der Gehäuseanordnung 12 drehfest, bezüglich dieser jedoch axial verlagerbar verbunden sind. Femer sind mehrere zweite Lamellen 28 vorgesehen, die mit einer in der Gehäuseanordnung 12 im radial inneren Bereich - bezogen auf eine Drehachse A - vorgesehenen Abtriebsnabe 30 drehfest, bezüglich dieser jedoch axial bewegbar verbunden sind. Es sei darauf hingewiesen, dass die verschiedenen Lamellen 26, 28 in herkömmlicher Weise aufgebaut sein können und zumindest teilweise Reibbeläge zur gegenseitigen Reibanlage tragen können. Ein im Gehäuseinneren 24 vorgesehener Kupplungskolben 32 kann durch Fluidbeaufschlagung axial bezüglich der Gehäuseanordnung 12 verschoben werden, wobei dann die verschiedenen Lamellen 26, 28 in gegenseitige Reibanlage gebracht werden und überdies im getriebenahen Bereich gegen die Gehäuseanordnung 12 gepresst werden. Es wird auf diese Art und Weise die Drehmomentübertragungsverbindung hergestellt.

Die Abtriebsnabe 30 weist im radial inneren Bereich eine Keilverzahnung auf, die mit einer komplementären Keilverzahnung einer im Allgemeinen als Getriebeeingangswelle dienenden Abtriebswelle 34 in drehfesten Eingriff bringbar ist. Die Getriebeeingangswelle 34 durchsetzt die als Hohlwelle ausgebildete erste Gehäusenabe 20 im Wesentlichen konzentrisch und weist in ihrem radial inneren Bereich eine Durchgangsöffnung 36 auf, über die Fluid herangefördert werden kann und über in der Antriebsnabe 22 vorgesehene Bohrungen 38 in einen zwischen dem Kupplungskolben 32 und der Gehäuseschale 14 gebildeten Raumbereich 40 geleitet werden kann. Es kann auf diese Art und Weise in diesem Raumbereich 40 ein Überdruck erzeugt werden, um den Kupplungskolben 32 gegen die Lamellen 26 bzw. 28 zu pressen.

Man erkennt in Fig. 1 weiter, dass die Kupplungsanordnung 10 an zwei axial bezüglich einenander versetzt liegenden Bereichen bezüglich antriebssystemfesten Komponenten, also letztendlich nicht der Kupplungsanordnung selbst zuzurechnenden Komponenten, in radialer Richtung gelagert ist. In einem ersten Radiallagerungsbereich 42 ist die Kupplungsanordnung 10 durch ein Radiallager 44 bezüglich des Getriebegehäuses 46 in radialer Richtung gelagert. Dabei liegt dieses Radiallager 44 zwischen dem Getriebegehäuse 46 und der ersten Gehäusenabe bzw. Pumpennabe 20. Altemativ oder zusätzlich kann in diesem ersten Radiallagerungsbereich 42 ein Radiallager 48 vorgesehen sein, das zwischen der Pumpennabe 20 und der Getriebeeingangswelle 34 liegt. Da die Getriebeeingangswelle 34 in einem Antriebssystem zwar drehbar ist, ansonsten jedoch als feststehende Komponente betrachtet werden kann, kann auf diese Art und Weise ebenso in dem dem Getriebe nah liegenden Bereich die Kupplungsanordnung 10 in radialer Richtung abgestützt werden.

Ein zweiter Radiallagerungsbereich 50 ist an der dem Antriebsaggregat zugewandten Seite der Kupplungsanordnung 10 vorgesehen. An diesen zweiten Radiallagerungsbereich 50 ist ein Radiallager 52 vorgesehen, an welchem die zweite Gehäusenabe oder Antriebsnabe 22 in radialer Richtung bezüglich der Getriebeeingangswelle 34 abgestützt ist. Während die beiden bereits angesprochenen Radiallager 46, 48 als Wälzkörpedager oder auch als Gleitlager ausgebildet sein können, ist das Radiallager 52 vorzugsweise als Gleitlager bzw. Gleitlagerungshülse ausgebildet, die mit einem radialen Fortsatz 54 gleichzeitig auch die Axiallagerung der Abtriebsnabe 30 bezüglich der Gehäuseanordnung 12, hier der Gehäusenabe 22, vorsieht. Über ein weiteres Radiallager 56 ist die Abtriebsnabe 30 auf der Gehäusenabe 22 in radialer Richtung gelagert. Einen weiteren Beitrag zur Radiallagerung der Abtriebsnabe 30 bildet der bereits angesprochene verzahnungsartige Eingriff derselben mit der Getriebeeingangswelle 34. Die Axialabstützung der Abtriebsnabe 30 in der anderen axialen Richtung, also zur Getriebeseite hin, erfolgt über einen Gleitlagerring 58, der an der Gehäuseschale 18 bzw. dem axialen Endbereich der Gehäusenabe 20 abgestützt sein kann.

Man erkennt in Fig. 1, dass als wesentliche der Radiallagerung der gesamten Kupplungsanordnung 10 dienenende Komponente die Getriebeeingangswelle 34 zum Einsatz kommt. Insbesondere bei Einsatz der beiden Radiallager 52, 48 kann die gesamte Radiallagerung an der Getriebeeingangswelle 34 erfolgen. Diese Anordnung hat den Vorteil, das eine vergleichsweise kurz bauende Gehäusenabe 20 zum Einsatz kommen kann.

Bei der in Fig. 1 dargestellten Ausgestaltungsform werden die im Betrieb auftretenden und auf das Antriebsaggregat zu gerichteten Axialkräfte, welche im Wesentlichen durch die druckmäßige Abstützung im radial inneren Bereich bezüglich der Getriebeanordnung erzeugt werden, durch die auch die Drehankopplung vorsehende Flexplatte oder ein sonstiges Kopplungsorgan übemommen.

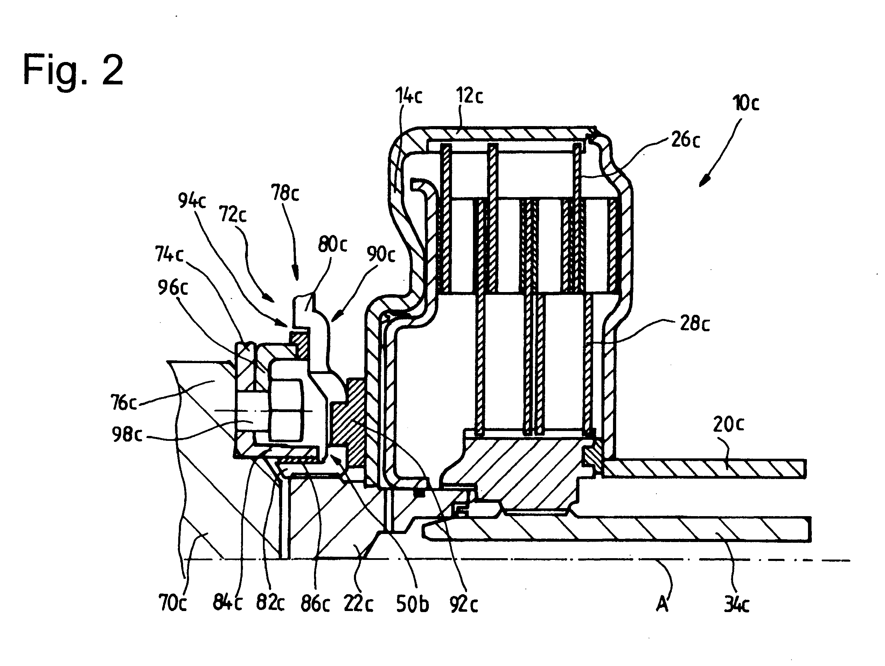

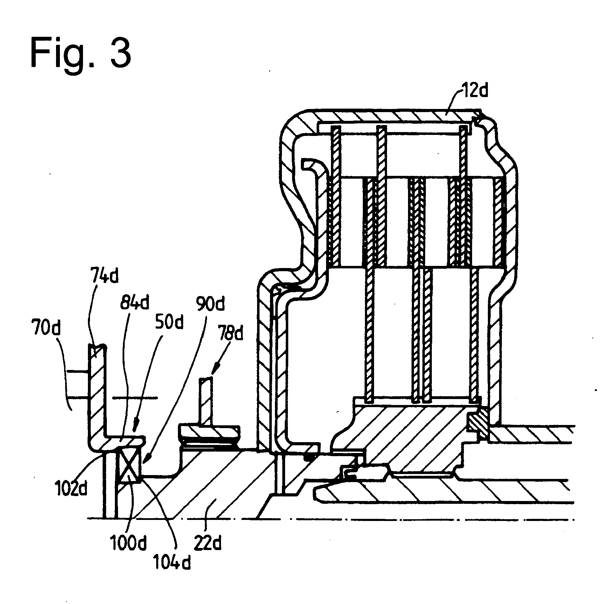

Während vorangehend mit Bezug auf die Figur 1 hauptsächlich auf die Radiallagerung einer Kupplungsanordnung bezüglich anderer, als feststehend zu betrachtenden Komponenten eines Antriebssystems beschrieben worden ist, wird im Folgenden mit Bezug auf die Figuren 2 und 3 im Wesentlichen auf den Aspekt der Axialabstützung eingegangen. Es sei darauf hingewiesen, dass bei den im Folgenden beschriebenen Ausgestaltungsformen der Aspekt der Radiallagerung so realisiert sein kann, wie vorangehend bereits beschrieben.

Bei der in Fig. 2 dargestellten Ausgestaltungsform sind Komponenten, welche vorangehend beschriebenen Komponenten hinsichtlich Aufbau bzw. Funktion entsprechen, mit dem gleichen Bezugszeichen unter Hinzufügung eines Anhangs "c" beschrieben.

Man erkennt, dass die Kupplungsanordnung 10 mit einer Antriebswelle 70c über einen nur in seinem radial inneren Bereich dargestellten und als sogenanntes Zwei-Massenschwungrad aufgebauten Torsionsschwingungsdämpfer 72c gekoppelt ist. Dieder kann herkömmlich aufgebaut sein und beispielsweise als Primärseite zwei Deckscheibenelemente umfassen, von welchen eines in Fig. 4 mit 74c bezeichnet ist und radial innen an der Antriebswelle 70c festgelegt ist. Radial außen liegen die beiden Deckscheibenelemente in axialem Abstand und sind miteinander fest verbunden. Diese Deckscheibenelemente 74c bilden im Wesentlichen auch eine Primärseite 76c des Torsionsschwingungsdämpfers 72c. Eine Sekundärseite 78c umfasst im Wesentlichen ein Zentralscheibenelement 80c, das in seinem radial äußeren Bereich zwischen die beiden bereist beschriebenen Deckscheibenelemente eingreift und über mehrere in Umfangsrichtung verteilt liegende Dämpferfedem zur Drehmomentübertragung mit diesen gekoppelt ist.

In seinem radial inneren Bereich weist das Zentralscheibenelement 80c einen im Wesentlichen zylindrischen Abschnitt 82c auf, der an seiner Innenseite über eine dort vorgesehene Verzahnung mit einer entsprechenden Außenverzahnung der Antriebsnabe 22c in Drehmitnahmeeingriff steht. Es ist auf diese Art und Weise die Gehäuseanordnung 12c drehfest an die Sekundärseite 78c des Torsionsschwingungsdämpfers 72c angekoppelt. Zwischen einem im Wesentlichen zylindrischen Abschnitt 84c des Deckscheibenelements 74c und dem zylindrischen Abschnitt 82c des Zentralscheibenelements 80c liegt ein beispielsweise als Gleitlagerhülse aufgebautes Radiallager 86c, über welches zum einen die Primärseite 76c in radialer Richtung bezüglich der Sekundärseite 78c gelagert ist, und welches zum anderen gleichzeitig auch den oder einen Teil des zweiten Radiallagerungsbereichs 50b bildet.

Man erkennt weiter, dass die Gehäuseanordnung 12c über eine Axiallagerungsanordnung 90c bezüglich der Antriebswelle 70c abgestützt ist. Die Axiallagerungsanordnung 90c umfasst einen ersten beispielsweise als Gleitlagerungsring aufgebauten Axiallagerungsbereich 92c. Dieser kann beispielsweise durch mehrere axiale Fortsätze mit dem Zentralscheibenelement 80c drehfest verbunden und bezüglich diesem zentriert sein und kann in Gleitanlage an dem Gehäuseschalenteil 14c sein. Diese axialen Fortsätze können beispielsweise in die Montagebohrungen des Zentralscheibenelementes 80c eingreifen, durch welche hindurch Zugriff auf die der Festlegung des Torsionsschwingungsdämpfers 72c an der Antriebswelle 70c dienenden Schraubbolzen 98c erhalten werden kann. Ein zweiter Axiallagerungsbereich 94c umfasst beispielsweise ebenfalls einen Gleitlagerungsring, welcher an einem mit dem Deckscheibenelement 74c zusammen an der Antriebsnabe 70c angebrachten Abstützring oder -element 96c axial abgestützt ist und an welchem das Zentralscheibenelement 80c in Achsrichtung abgestützt ist. Es ist somit ein direkter Axialkraftfluss von der Gehäuseanordnung 12c über den ersten Axiallagerungsbereich 92c, das Zentralscheibenelement 80c, den zweiten Axiallagerungsbereich 94c, das Element 96c und das Deckscheibenelement 74c in die Antriebswelle 70c vorgesehen. Der zur Drehmomentübertragung dienende und weiter radial außen liegende Bereich, in welchem die bereits angesprochenen Dämpferfedem positioniert sind, ist somit von Axialkräften im Wesentlichen frei gehalten und kann somit die Drehmomentübertragungsfunktion und auch die Schwingungsdämpfungsfunktion in von Axialkräften im Wesentlichen unbeeinträchtigter Art und Weise erfüllen. Gleichzeitig bilden die verschiedenen Axiallagerungsbereiche Reibbereiche, welche nach Art einer Trockenreibeinrichtung zur Schwingungsdämpfung beitragen können.

Eine weitere abgewandelte Ausgestaltungsform ist in Fig. 3 gezeigt. Komponenten, welche vorangehend beschriebenen Komponenten hinsichtlich Aufbau bzw. Funktion entsprechen, sind mit dem gleichen Bezugszeichen wie in den vorangehend beschriebenen Figuren unter Hinzufügung eines Anhangs "d" beschrieben.

Bei der in Fig. 3 dargestellten Variante umfasst die Axiallagerungsanordnung 90d ein kombiniertes Axial/Radial-Lager 100d. Dieses liegt zwischen der Gehäusenabe oder Antriebsnabe 22d und dem im Wesentlichen zylindrischen Abschnitt 84d des bereits vorangehend angesprochenen Deckscheibenelementes 74d. Um die Axialkraftübertragung in Richtung auf das Antriebsaggregat erfüllen zu können, ist sowohl an dem zylindrischen Abschnitt 84d als auch der Antriebsnabe 22d eine jeweilige Radialschulter 102d, 104d vorgesehen, an welchen das beispielsweise als Wälzkörperlager augebildete Lager dann in Achsrichtung abgestützt ist. Dieses Lager übernimmt also neben der Funktion der Axialkraftübertragung auch die Funktion der Radialabstützung der Gehäuseanordnung 12d in ihrem dem Antriebsaggregat nahe liegenden Bereich und bildet somit wenigstens einen Teil der Radiallagerungsanordnung 50d. Auch bei dieser Ausgestaltungsform ist der nur schematisch angedeutete Torsionsschwingungsdämpfer von Axialkräften und auch von Radialkräften im Wesentlichen frei gehalten, so dass er von diesen Krafteinwirkungen unbeeinträchtigt seine Schwingungsdämpfunsgfunktion erfüllen kann.

## Patentansprüche

1. Kupplungsanordnung, insbesondere für ein Kraftfahrzeug mit einer Drehachse (A), versehen mit einer drehfesten Ankoppelung einer mit Fluid gefüllten Gehäuseanordnung (12d) an eine Antriebswelle eines Antriebsaggregates, umfassend:
a) eine erste Gehäusenabe an einer einem Getriebe zugewandt positionierten Seite der Gehäuseanordnung (12d),
b) eine zweite Gehäusenabe (22d), an einer einem Antriebsaggregat zugewandt positionierten Seite der Gehäuseanordnung (12d),
c) wenigstens ein mit der Gehäuseanordnung (12d) zur gemeinsamen Drehung verbundenes erstes Reiborgan, und
d) wenigstens ein mit der Abtriebswelle zur gemeinsamen Drehung verbundenes zweites Reiborgan,
**dadurch gekennzeichnet**,
e) dass die Kupplungsanordnung (10d) vermittels einer Axiallagerungsanordnung (90d) bezüglich einer Antriebswelle (70d) eines Antriebsaggregats abgestützt ist, und
f) dass die Gehäuseanordnung (12d) im Bereich einer Gehäusenabe (22d) bezüglich der Antriebswelle (70d) gelagert ist, indem
g) die Gehäusenabe (22d) mittels einer Axiallagerungsanordnung (90d) in Form eines kombinierten Axial/Radial-Lagers (100d) an einer mit der Antriebswelle (70d) fest verbundenen Primärseite (76d) einer Torsionsschwingungsdämpferanordnung (72d) gelagert ist.
